# EUROPEAN PATENT APPLICATION

(11) **EP 2 735 942 A1**
(43) Date of publication of application: **28.05.2014**
(21) Application number: 12194489.6
(22) Date of filing: 27.11.2012
(51) Int. Cl.: G06F 3/041

(54) **Electronic device with touch input display system using head-tracking to reduce visible offset for user input**

(71) Applicant: BlackBerry Limited, Waterloo, ON N2K 0A7 (CA)
(72) Inventor: Gärdenfors, Dan Zacharias, 21140 Malmö (SE)
(74) Representative: Greenaway, Martin William

(57) **Abstract**

An electronic device (500, 652), computer readable storage medium (662), and method (FIG. 7) use head tracking to reduce visible offset (118) for user input at a touch input display (508, 634). Touch coordinates indicate a location (309) on an outer surface of a touch sensitive screen layer of the touch input display at which a contact interaction is detected. Based on image information from at least one camera (522, 524, 618) and the touch coordinates, a direction (314) of a user's perspective field of view (312) of the location (309) on the touch sensitive screen layer is determined. A location on one of the at least one display layer (304, 402, 404) that visibly matches the location (309) corresponding to the touch coordinates on the touch sensitive screen layer along the direction (314) of a user's perspective field of view (312) is determined. One or more display elements (315, 411, 413) are displayed at the determined location on the one of the at least one display layer (304, 402,404).

## Description

### FIELD OF THE DISCLOSURE

The present disclosure generally relates to electronic devices with touch input displays, and more particularly to an electronic device with a touch input display system and a head-tracking system.

### BACKGROUND

Many different types of electronic devices, such as mobile phones, cellular phones, smartphones, personal computers, laptop personal computers, portable computers, tablet computers, and the like, commonly include touch input displays which also may be referred to as touch screen displays. While operating with a touch input display the electronic device typically accepts input from a user, such as by the user touching the outer touch sensitive surface of the touch input display with a stylus, a finger, or another object.

Especially, but not limited to, when using a fine tip stylus for input on a touch input display screen, a user might experience a visible offset between the location where the tip of the stylus touches and interacts with an outer touch sensitive surface of the touch input display and the location of where one or more pixels are displayed in response to the touch input interaction. That is, the user expects the displayed one or more pixels to visibly coincide with the touch surface coordinates of the location of the tip of the stylus. However, the displayed one or more pixels are seen by the user at an apparent different location - i.e., at a visible offset.

This visible offset is typically a consequence of the depth of the translucent glass layer in front of the one or more pixels being displayed on a lower display layer of the touch input display. Since the user might look at the tip of the stylus from many different angles, it is not always the pixel that is immediately below the tip of the stylus that the user expects to be affected when touching the touch screen display. While this type of optical phenomena also is true for user finger input, it is most obvious when drawing or writing with a fine tip stylus since the contact region of touch input is very small. Users expect the stylus tip touch input interaction to be like writing or drawing on paper.

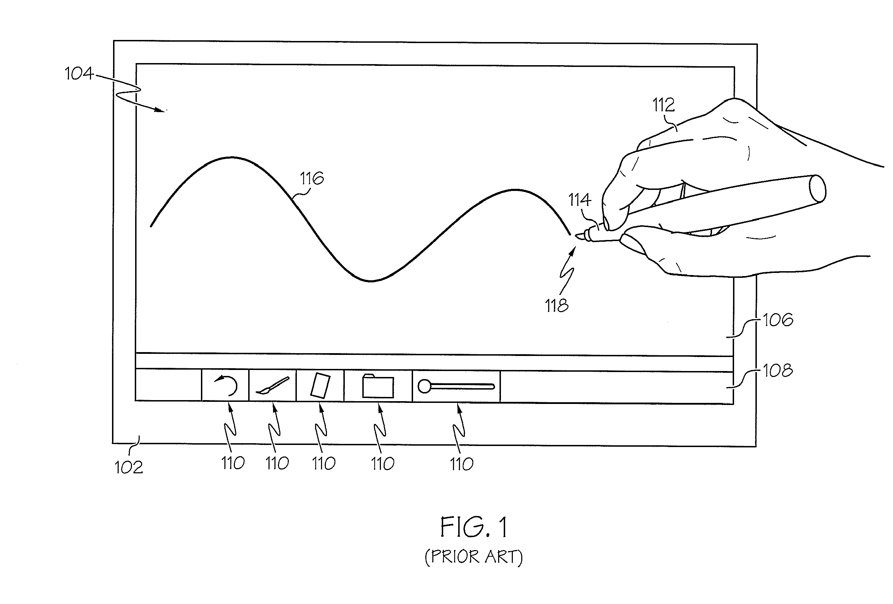

As illustrated in FIG. 1, for example, a conventional electronic device 102 with a touch screen display 104 is shown. The touch screen display 104 includes an area 106 for drawing or painting, as shown. A second area 108 of the touch screen display 104 includes a plurality of icons 110 arranged in a bar orientation allowing a user to select a mode of operation of an application running in the electronic device 102. A user's hand 112 is holding a stylus 114. The tip of the stylus 114 is touching a contact region at a touch sensitive surface on the touch screen display 104. The user is drawing a curvilinear line 116 on the touch screen display 104. At the region of contact on the touch screen display 104 the tip of the stylus 114 is visibly spaced apart 118 from the displayed image of the curvilinear line 116 being drawn by the user on the touch screen display 104. This visible difference (discrepancy) 118 can be frustrating to a user of the electronic device 102.

### BRIEF DESCRIPTION OF THE DRAWINGS

The accompanying figures in which like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 is a planar view of a prior art user interface of an electronic device;

FIG. 2 is a schematic view of the user interface of an electronic device shown in FIG, 1;

FIGs. 3 and 4 are schematic views of an example user interface for an electronic device, according to the present disclosure;

FIG. 5 is a front perspective view of an example of an electronic device illustrating a user interface, according to one example of an embodiment of the present disclosure;

FIG. 6 is a block diagram of an example of an electronic device such as the one shown in FIG. 5, and associated components in which the systems and methods disclosed herein may be implemented; and

FIG. 7 is a flow diagram illustrating an example of an operational flow sequence for an electronic device such as the ones shown in FIGs. 5 and 6, in accordance with the present disclosure.

### DETAILED DESCRIPTION

As required, detailed embodiments are disclosed herein; however, it is to be understood that the disclosed embodiments are merely examples and that the devices, systems and methods described herein can be embodied in various forms. Therefore, specific structural and functional details disclosed herein are not to be interpreted as limiting, but merely as a basis for the claims and as a representative basis for teaching one of ordinary skill in the art to variously employ the disclosed subject matter in virtually any appropriately detailed structure and function. Further, the terms and phrases used herein are not intended to be limiting, but rather, to provide an understandable description. Additionally, unless otherwise specifically expressed or clearly understood from the context of use, a term as used herein describes the singular or the plural of that term.

The terms "a" or "an", as used herein, are defined as one or more than one. The term "plurality", as used herein, is defined as two or more than two. The term "another", as used herein, is defined as at least a second or more. The terms "including" and "having," as used herein, are defined as comprising (i.e., open language). The term "coupled," as used herein, is defined as "connected," although not necessarily directly, and not necessarily mechanically. "Communicatively coupled" refers to coupling of components such that these components are able to communicate with one another through, for example, wired, wireless or other communications media. The term "communicatively coupled" or "communicatively coupling" includes, but is not limited to, communicating electronic control signals by which one element may direct or control another. The term "configured to" describes hardware, software or a combination of hardware and software that is adapted to, set up, arranged, commanded, altered, modified, built, composed, constructed, designed, or that has any combination of these characteristics to carry out a given function. The term "adapted to" describes hardware, software or a combination of hardware and software that is capable of, able to accommodate, to make, or that is suitable to carry out a given function.

The terms "controller", "computer", "server", "client", "computer system", "computing system", "personal computing system", or "processing system" describe examples of a suitably configured processing system adapted to implement one or more embodiments of the present disclosure. Any suitably configured processing system is similarly able to be used by embodiments of the present disclosure, for example and not for limitation, a personal computer, a laptop computer, a tablet computer, a personal digital assistant, a workstation, or the like. A processing system may include one or more processing systems or processors. A processing system can be realized in a centralized fashion in one processing system or in a distributed fashion where different elements are spread across several interconnected processing systems.

The terms "computing system", "computer system", and "personal computing system", describe a processing system that includes a user interface and which is suitably configured and adapted to implement one or more embodiments of the present disclosure. The terms "network", "computer network", "computing network", and "communication network", describe examples of a collection of computers and devices interconnected by communications channels that facilitate communications among users and allows users to share resources.

The term "electronic device" is intended to broadly cover many different types of electronic devices used by persons, and that include a user interface that can interoperate with a user. For example, and not for any limitation, an electronic device can include any one or a combination of the following: a two-way radio, a cellular telephone, a mobile phone, a smartphone, a two-way pager, a wireless messaging device, a personal computer, a laptop personal computer, a tablet computer, a gaming unit, a personal digital assistant, and other similar electronic devices.

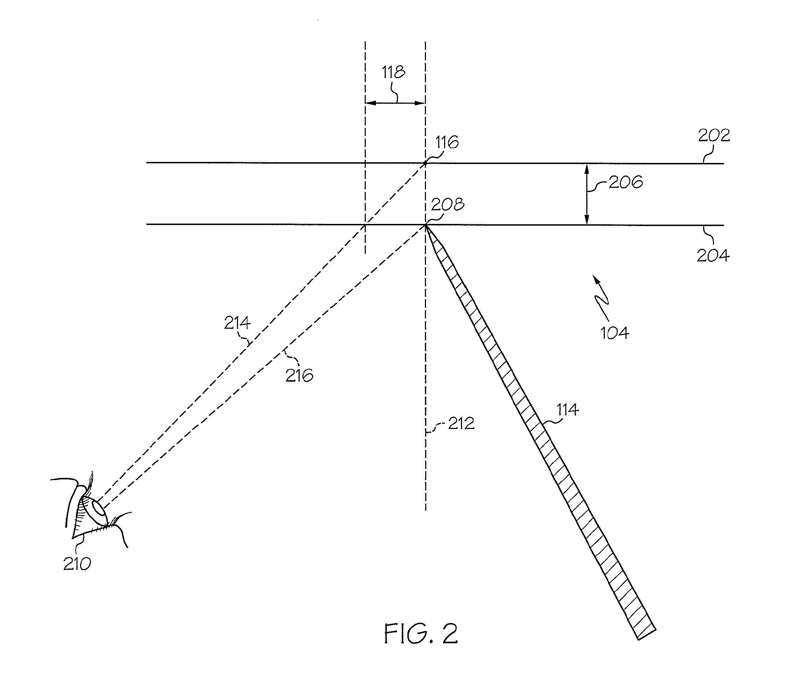

As illustrated in FIG. 2, and also with reference to FIG. 1, a visible discrepancy 118 can be experienced by a user while touching a touch input display 104 and expecting one or more pixels 116 to be displayed coincident with the point of contact 208. This visible discrepancy 118 is a type of optical phenomena also referred to as the parallax effect. Parallax is a displacement or difference in the apparent position of an object viewed along two different lines of sight. For example, in the dashboard of a motor vehicle a needle-style speedometer gauge indicates the speed of the vehicle. When viewed by the driver from directly in front, the speed may show exactly 60; but when viewed from the passenger seat (at a different angle from the driver) the needle may appear to show a slightly different speed, due to the different angle of viewing.

The user's field of view 210, as shown in FIG.2, is at an angle relative to a normal vector 212 taken from the pixels 116 being displayed on the display layer 202. A touch sensitive layer 204 of the touch screen display 104 is spaced apart from the display layer 202 by a distance 206. This separation distance 206 combined with a user's field of view 210 being at an angle relative to the normal vector 212 creates the appearance that the point of contact 208 of the stylus 114 on the touch sensitive layer 204 is visually different than the associated pixels 116 being displayed on the display layer 202. That is, from the field of view 210 of the user the point of contact 208 of the stylus 114 is at a first angle 216 while the associated pixels 116 being displayed on the display layer 202 is at a second different angle 214. This difference in the user's field of view 210 between the point of contact 208 of the tip of the stylus 114 and the associated pixels 116 being displayed on the display layer 202 creates the parallax effect, as illustrated in FIG.1.

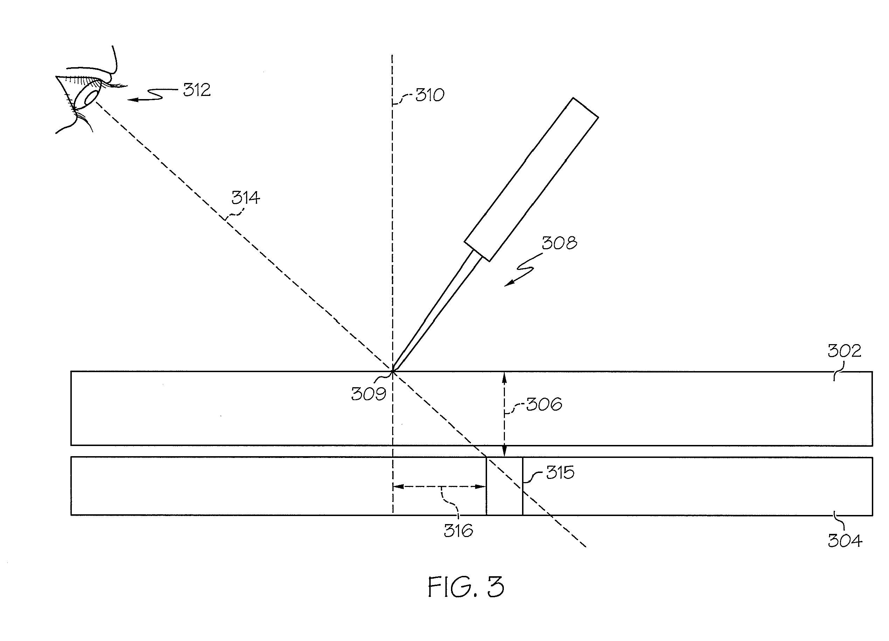

Referring to FIG.3, an electronic device includes a touch input display with an outer translucent layer 302. The translucent layer 302 typically includes an outer glass layer with a touch sensitive screen layer disposed thereon. The touch sensitive screen layer is translucent and has an outer surface. The touch sensitive screen layer is electrically coupled with a processor/controller for the electronic device. The processor/controller can detect contact with the outer surface of the touch sensitive screen layer.

Additionally, disposed below and adjacent to the outer translucent layer 302 is at least one display layer 304. The display layer 304 is located at a known given distance 306 below the outer surface of the touch sensitive screen layer disposed on the translucent layer 302, as shown in FIG.3.

A display controller (not shown) can control the display of displayable elements, e.g., one or more pixels that are displayed in the display layer 304, as shown. When the tip of a stylus 308, or other object, makes a contact on the outer surface of the touch sensitive screen layer disposed on the translucent layer 302, the contact interaction is sensed by the touch sensitive screen layer on the translucent layer 302 and the display controller can determine touch input coordinates (touch coordinates) for the specific location 309 on the outer surface of the touch sensitive screen layer on the translucent layer 302, where the tip of the stylus 308 is detected making contact.

As shown in FIG.3, the location 309 of touch interaction is associated with a touch coordinate defined on a coordinate grid extending across the touch sensitive screen layer on the translucent layer 302. A normal axis 310 (i.e., normal to the touch sensitive screen layer on the translucent layer 302), defines a corresponding location in the at least one display layer 304 that is located directly below the location 309 indicated by the touch coordinates on the touch sensitive screen layer on the translucent layer 302.

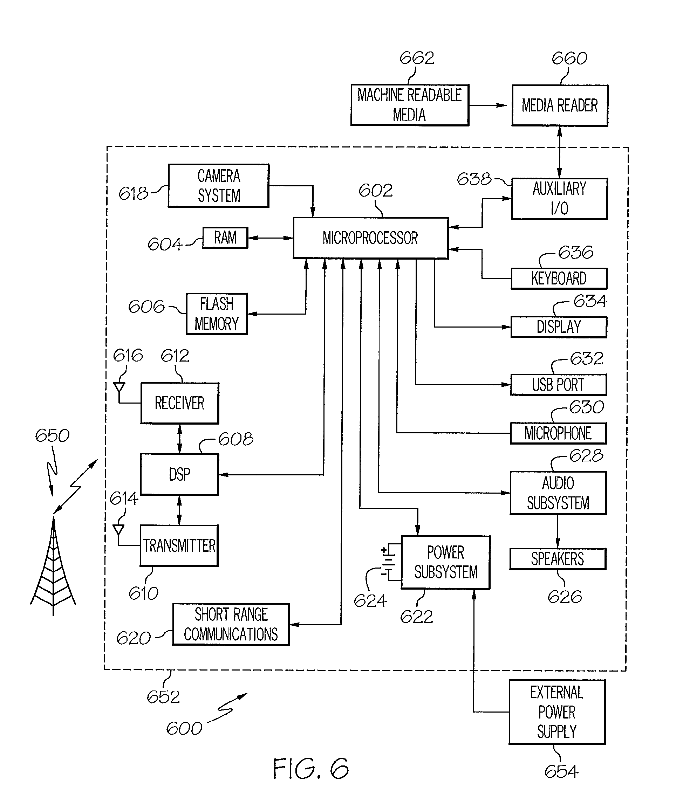

The display controller (not shown in FIG. 3, but see microprocessor 602 in FIG. 6), according to certain embodiments, can monitor signals from a camera system (not shown in FIG. 3, but see camera system 618 in FIG. 6) that comprises one or more forward-facing camera devices in the electronic device. The term forward-facing camera device is intended to broadly cover any of many different types of camera devices, and more specifically a camera device that is disposed in connection with the electronic device and arranged (and oriented) with its field of view generally facing forward from the front of the electronic device toward a region located above the touch sensitive screen layer where the head of a user of the electronic device is expected to be located during normal operation of the electronic device. The display controller utilizing the camera system can determine an approximate location of a user's head relative (and/or the location of one or both of the user's eyes) to the location 309 on the touch sensitive screen layer on the translucent layer 302 indicated by the touch coordinates. Various methods, and software algorithms, for face detection, detecting and tracking the location of eyes in a face, and tracking a person's head positions and head movement (and optionally for also detecting and tracking eyes positions and movement) relative to a camera system of an electronic device are well known, and will not be repeated here.

As an example, an electronic device may include one or more forward-facing camera devices. The electronic device also includes at least one controller communicatively coupled with the one or more forward-facing camera devices. One or both of a person's eyes in a scene captured by a camera device (in the camera device's field of view) can be recognized by the controller from analyzing information represented by electronic signals received from the one or more camera devices. The location of the one or more eyes of the person in the scene can be determined by the controller. The controller then can approximate a direction of the person's perspective field of view from one of the eyes (or can approximate a direction from a point on the person's head between both eyes, or can approximate a direction using another similar approach) to a location on an outer surface of a touch input display of the electronic device.

According to the present example illustrated in FIG. 3, the display controller (not shown in FIG. 3, but see 602 in FIG. 6) can determine an approximate direction 314 of the user's perspective field of view 312 from the approximate relative location of the user's head (e.g., and according to certain embodiments the approximate relative location of the user's eyes) relative to the location 309 on the touch sensitive screen layer on the translucent layer 312 corresponding to the touch coordinates. That is, the controller receives a touch coordinate signal from the touch input display device, the touch coordinate signal indicating touch coordinates of a location on the outer surface of the touch sensitive screen layer at which a contact interaction is detected. The determined direction 314 of the user's perspective field of view 312 extends below the translucent layer 302 to the underlying at least one display layer 304, as shown.

The display controller, based on the determined direction 314 of a user's perspective field of view 312 relative to the location 309 indicated by the touch coordinates on the surface of the touch sensitive screen layer, can determine where to locate one or more display elements (e.g., one or more pixels elements) 315 in the determined direction 314 of the user's perspective field of view 312 where it intersects with the display layer 304, as shown in FIG. 3. That is, the display controller can cause rendering display of one or more pixel elements 315 at a location on the display layer 304 along the direction 314 of the user's perspective field of view 312.

The vertical location of the one or more pixels elements 315 in the display layer 304 is a known distance 306 below the outer surface of the touch sensitive screen layer on the translucent layer 302. The location in the display layer 304 is also a determined lateral distance 316 from the normal axis 310, and can be calculated (e.g., geometrically calculated), from the intersection of the normal axis 310 of the touch coordinates with the display layer 304 and the direction 314 of the user's perspective field of view 312. In this way, the one or more pixel display elements 315 are rendered and displayed in the display layer 304 at a location that visibly matches (or visibly nearly matches) the vicinity location 309 on the outer surface of the touch sensitive screen layer on the translucent layer 302, as seen from the direction 314 of the user's perspective field of view 312 toward the vicinity location 309 and where it intersects with the display layer 304. It should be noted that the determination, such as using calculations or geometrical calculations, for visibly matching (or nearly matching) the location of the display elements 315 in the display layer 304 relative to the location 309 indicated by the touch coordinates as seen from the direction 314 of the user's perspective field of view 312 do not necessarily result in a perfect visible match. This can be due to different factors. For example, each eye of a person normally would have a different direction 314 of perspective field of view 312. Therefore, an approximation of a general direction 314 would often be used by an electronic device. The terms "visibly matching" or "visibly match", "visibly nearly matching" or "visibly nearly match", and "visibly coincident", as used herein are intended to broadly and generally cover the process of determining a location for display elements 315 that reduces a visible discrepancy 118 between the location of the display elements 315 in the display layer 304 relative to the location 309 indicated by the touch coordinates as seen from the apparent direction 314 of the user's perspective field of view 312. The user accordingly is provided an apparent view of displayed one or more pixel elements 315 in the underlying display layer 304 at a location that is visibly coincident (i.e., visibly matching or nearly matching) with the apparent view of the contact region location 309 where the tip of the stylus 308 (or other object) is touching the outer surface of the touch sensitive screen layer on the translucent layer 302. This novel method and structure for an electronic device with a touch input display can solve the frustrating parallax effect visible discrepancy 118 problem experienced by a user of an electronic device.

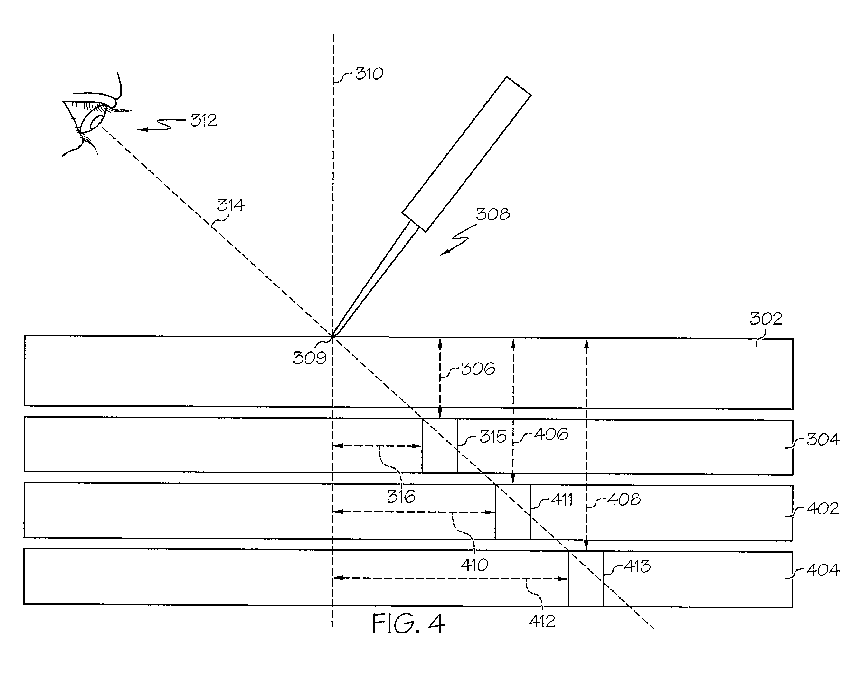

With reference to FIG.4, an example of an electronic device includes a touch input display similar to that shown in FIG.3, with the addition of two further underlying display layers 402, 404, disposed below the first display layer 304 and the translucent layer 302 as have been discussed with reference to FIG. 3. According the present example, at least the first and second display layers 304, 402, and optionally also the third display layer 404, are at least partially translucent. When a display controller renders display of one or more display elements (e.g., one or more pixels) 315, 411, 413, in respective one or more of the display layers 304, 402, 404, the one or more display elements 315, 411, 413, typically will be opaque to light. However, other portions of the respective display layers 304, 402, 404, may continue to be translucent, as indicated in FIG. 4.

According to the present example, the display controller determines touch coordinates for a location 309 on the touch sensitive outer surface of the translucent layer 302 making contact interaction with the tip of the stylus 308. The display controller thereby also determines the corresponding locations in the underlying display layers 304, 402, 404, that are directly below the touch coordinates on the touch sensitive outer surface of the translucent layer 302 (i.e., along the normal axis 310). The display controller also determines the direction 314 of the user's perspective field of view 312 relative to the location 309 at the touch coordinates on the touch sensitive outer surface of the translucent layer 302. Each display layer 304, 402, 404, has a defined distance 306, 406, 408, below the top surface of the translucent layer 302. With these pieces of information, the display controller can determine (e.g., calculate) the location at any one or more of the display layers 304, 402, 404, to render display of respective one or more display elements 315, 411, 413, as shown in FIG.4.

Specifically, with knowledge of the above discussed information, the display controller can geometrically calculate the relative distance 316 from the normal vector 310 for one or more display elements 315 in the first display layer 304, and the relative distance 410 for one or more display elements 411 in the second display layer 402, and the relative distance 412 for one or more display elements 413 in the third display layer 404, as shown in FIG.4. The one or more display elements 315, 411, 413, at each respective display layer 304, 402, 404, are rendered displayed along the determined direction 314 of the user's perspective field of view 312 to visibly match the location on the touch sensitive outer surface of the translucent layer 302 at the vicinity location 309 of the touch coordinates. The user accordingly is provided an apparent view of a location of the displayed one or more pixel elements 315, 411, 413, in the underlying one or more display layers 304, 402, 404, that is visibly coincident with the apparent view of the contact region location 309 where the tip of the stylus 308 is touching the touch sensitive outer surface of the translucent layer 302.

In summary, the display controller can calculate and determine the location to render display elements 315, 411, 413, at each of the respective display layers 304, 402, 404, based on the display controller's determined: 1) location 309 of a user's touch interaction on the touch sensitive outer surface of the translucent layer 302, and 2) direction 314 of the user's perspective field of view 312 relative to the location 309 on the outer touch sensitive surface of the translucent layer 302 corresponding to the touch coordinates. The display controller can calculate, either geometrically or using other types of calculations, a distance 316, 410, 412, from the normal vector 310 to render display of the specific one or more display elements 315, 411, 413, of the respective display layer 304, 402, 404, that is a known distance 306, 406, 408, below the touch sensitive outer surface of the translucent layer 302. The particular one or more displayable elements 315, 411, 413, are displayed on any one or more of the respective display layers 304, 402, 404, located along the direction 314 of the user's perspective field of view 312 to visibly match the location 309 on the touch sensitive outer surface of the translucent layer 302 touched by the user (e.g., touched with the tip of the stylus), as seen by the user while touching the touch sensitive outer surface of the translucent layer 302 at the touch coordinates.

According to various embodiments, a display controller can dynamically continuously determine (from at least image information from the at least one camera device) changes in the approximate location of the user's head (and/or user's eyes) relative to the location 309 on the touch sensitive outer surface of the translucent layer 302 indicated by the touch coordinates. The display controller accordingly dynamically continuously determines each new direction 314 of the changing field of view 312 relative to the location 309 corresponding to the touch coordinates. The display controller can thereby dynamically continuously adjust the location to a new location of the one or more display elements 315, 411, 413, at each of the respective display layers 304, 401, 404, to visibly match with the location 309 on the outer surface of the touch sensitive screen layer on the translucent layer 302, relative to the determined each new direction 314 of the user's field of view 312. The adjustments in the relative distances 316, 410, 412, of the one or more display elements 315, 411, 413, from the normal vector 310 to match each new direction 314 of the user's field of view 312 can be done dynamically and continuously by the display controller while touch interaction is detected at a set of touch input coordinates (e.g., a vicinity location 309) on the touch sensitive screen layer on the translucent layer 302.

Handheld Communication Device

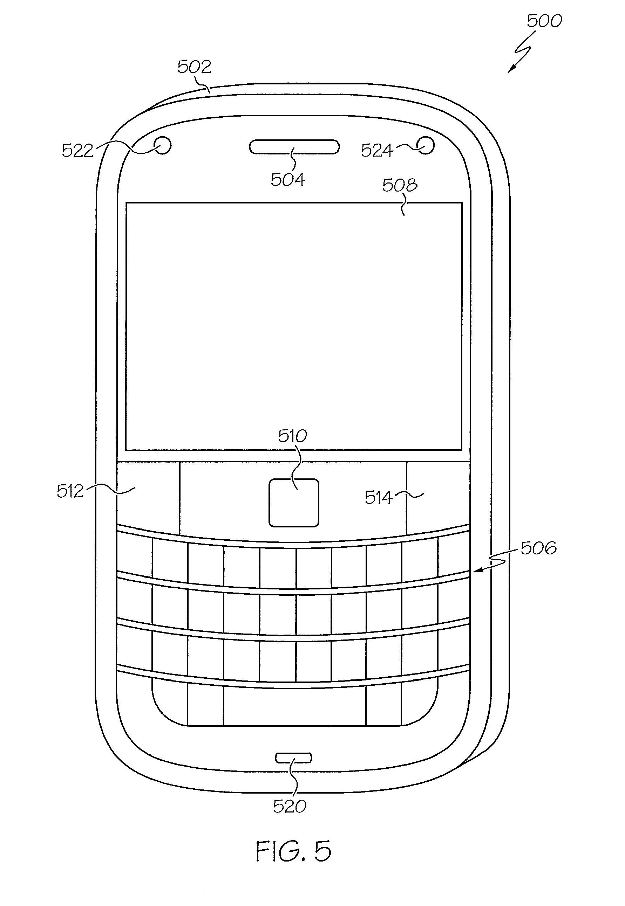

FIG. 5 illustrates an example of an electronic device 500 that comprises a handheld communication device 502 suitable for use with various embodiments of the present disclosure. The electronic device 500 of the present example comprises at least one of a Personal Digital Assistant (PDA), a smart-phone, a cellular telephone, a mobile phone, a tablet computer, a laptop PC, or any other type of electronic device. In general, a handheld communication device 502 refers to any communication device that is sized, shaped and designed to be held or carried in a human hand. The electronic device 500 includes a wireless communications subsystem, described below, that is able to exchange voice and data signals. In one example, the wireless communications subsystem is able to receive a wireless signal conveying image information (e.g., various types of content) to be displayed by the electronic device 500 such as on the display 508.

The electronic device 500 includes an earpiece speaker 504 that is used to generate output audio to a user engaged in, for example, a telephone call. A microphone 520 is able to accept audible signals, such as a user's voice, and produce an electrical signal representing the audible signal. The electronic device 500 further includes a keyboard 506 that allows a user to enter alpha numeric data for use by, for example, application programs executing on the electronic device 500.

The electronic device 500 has a touch input display (e.g., a touch screen display) 508. The touch input display 508 depicted in the example of FIG. 5 comprises a touchscreen graphical display capable of displaying various images to a user. The display 508 in the example comprises a touchscreen user input interface device coupled with the display 508 (i.e., providing a touchscreen display) that allows a user to touch the screen (i.e., the outer surface) of the display 508 to provide user input to the electronic device 500. For example, the user can touch the screen of the display 508 and draw images on the display screen. In certain embodiments, the display 508 can comprise a virtual keyboard with keys that the user can touch to enter data, commands, and the like, into the electronic device 500. The user can also touch the screen of the display to select displayed items. The user can optionally perform gestures, such as swiping a finger across the touch screen of the display 508, to provide a user input interface to an application program operating in the electronic device 500. Based on detecting a user's gesture, such as swiping or moving, a finger touching the screen of the display 508 across the screen, the display 508 accepts a user interface input that is associated with the gesture performed by the user.

The electronic device 500 further has a first selection button 512 and a second selection button 514. In one example, a user is able to select various functions or select various options presented on the display 508 by pressing either the first selection button 512 or the second selection button 514. In another example, the first selection button 512 and the second selection button 514 are associated with particular functions that are performed in response to pressing the respective button.

The electronic device 500, according to the present example, also includes a trackpad 510 that typically, although not necessarily, is a user input device located separate from the touch screen display 508. The trackpad 510 is able to accept user input (e.g., user gestures) indicating a direction or movement, a magnitude of movement, a velocity of movement, or a combination of these quantities, in response to a user moving at least one finger (or stylus) across the outer surface of the face of the trackpad 510.

In further examples, a user is able to use various techniques to provide inputs that are accepted by a processor of the electronic device 500. For example, the microphone 520, is communicatively coupled with a processor 602 (see FIG. 6), and thereby is able to accept audible voice commands uttered by a user and process those audible voice commands to create input signals that are accepted by other processes to control further processing. A user is also able to use the keyboard 506 to enter commands that a processor 602 of the electronic device 500 interprets to produce inputs that are accepted by other processes to control further processing.

As shown in FIG.5, one or more forward facing (i.e., facing the user of the device) camera devices 522, 524, are located on the user interface at the outer housing of the electronic device 500. These camera devices 522, 524, can be used by a display controller (e.g., operating with the processor/controller 602 as shown in FIG. 6) to determine the approximate location of a user's head relative to the touch input display 508. As the user moves their head relative to the touch input display 508, the display controller monitors signals from the one or more camera devices 522, 524. The display controller can determine a new direction of the perspective field of view of the user relative to a region on the outer surface of the touch input display 508 indicated by touch coordinates where the user has made a touch interaction with the touch input display 508.

FIG. 6 is a block diagram of an example of an electronic device 600 and associated components 652 in which the systems and methods disclosed herein may be implemented. This example of an electronic device 600, according to various embodiments, also corresponds to the handheld communication device shown in FIG. 5.

In this example, an electronic device 600 comprises a wireless two-way communication device that is able to provide one or both of voice and data communication capabilities. Such electronic devices communicate with a wireless voice or data network 650 via any suitable wireless communication protocol or protocols. Wireless voice communication is performed using either analog or digital wireless communication protocols according to the network 650 to which the wireless communication device is connected. Data communications to and from the electronic device 600 support exchanging data with other computer systems through any suitable network, such as the Internet. Examples of electronic devices that are able to incorporate the above described systems and methods include, but are not limited to, data pagers, data messaging devices, cellular telephones, mobile phones, tablet computers, netbook computers, laptop computers, or a data communication device that may or may not include telephony capabilities.

The illustrated electronic device 600 is an example electronic wireless communication device that includes two-way wireless communication components to provide wireless data communication with a wireless data network, wireless voice data communications with a wireless voice network, or both. Such electronic devices incorporate communication subsystem elements such as a wireless transmitter 610, a wireless receiver 612, and associated components such as one or more antenna elements 614 and 616. A digital signal processor (DSP) 608 performs processing to extract data from received wireless signals and to generate signals to be wirelessly transmitted. The particular design of the communication subsystem is dependent upon the communication network and associated wireless communication protocols with which the electronic device is intended to operate.

Data communication with the electronic device 600 generally includes receiving data, such as a text message or web page download, through the receiver 612 and providing that received data to the microprocessor (which may also be referred to as "processor/controller") 602. The microprocessor 602 is then able to further process the received data for output to the display 634 (which in this example is also a touch input display or also referred to as a touch screen display) or to other devices such as an auxiliary I/O device 638 or through the Universal Serial Bus (USB) port 632. The electronic device 600 also allows a user to create data items and content, such as e-mail messages and graphical images, using a user input device such as the keyboard 636 (or other user input device as has been discussed above) and possibly in conjunction with use of the touch screen display 634, and possibly with data received through an auxiliary I/O interface device 638. Such composed items are then able to be wirelessly transmitted over a wireless communication network through the wireless transmitter 610.

The electronic device 600 performs voice communications by providing received signals from the receiver 612 to the audio subsystem 628 for reproduction by speakers 626. A user's voice is able to be converted to electrical signals from microphone 630 for transmission by transmitter 610.

A short-range communication subsystem 620 provides communication between the electronic device 600 and different systems or devices. Examples of short-range communication subsystems 620 include an infrared device and associated circuits and components, or a Radio Frequency (RF) based communication subsystem such as a Bluetooth®, Zigbee®, Wi-Fi or Wi-MAX communication subsystem, or a Near Field Communication (NFC) communication circuitry, to provide for wireless communication with similarly-enabled systems and devices.

The electronic device 600 includes at least one microprocessor (e.g., at least one processor/controller) 602 that controls device operations for the device 600. The microprocessor 602 is communicatively coupled with and interacts with the above described communication subsystem elements to implement and control wireless communication with the network 650. The microprocessor 602 is further communicatively coupled with, and performs control and data exchange functions by interacting with, for example, non-volatile memory 606 such as flash memory 606, and random access memory (RAM) 604, the auxiliary input/output (I/O) device 638, the USB Port 632, the touch screen display 634, the keyboard 636, and the audio subsystem 628, the microphone 630, the short-range communication subsystem 620, a power subsystem 622 (with battery 624), and any other device subsystems. In various embodiments, an particularly in this example, the display 634 comprises a touchscreen display 634 that is able to accept inputs from a user that touches the touchscreen display 634 with one or more of the user's fingers, or with the tip of a stylus, or with other object. The touchscreen display 634, according to certain embodiments, can accept inputs from a user that can correspond to various gestures performed by the user in touching the screen of the display 634.

In one example, the microprocessor 602 comprises a display controller 602 that generates, creates, modifies, controls and manages images and other data presented on the display 634. The microprocessor (e.g., operating with a display controller) 602 further is communicatively coupled with and accepts user inputs from a user input interface device, such as from the keyboard 636, buttons 512, 514, the touch screen display 508, 634, the trackpad 510, or other types of user input devices that are not shown in this example.

An internal power pack, such as a battery 624, is connected to the power subsystem 622 to provide power to the circuits of the electronic device 600. The power subsystem 622 includes power distribution circuitry to supply electric power to the various components 652 of the electronic device 600 and also includes battery charging circuitry to support recharging the battery 624. An external power supply 654 is able to be connected to the power subsystem 622. The power subsystem 622 includes a battery monitoring circuit that provides a status of one or more battery conditions, such as remaining capacity, temperature, voltage, current draw, and the like. The microprocessor 602 is communicatively coupled with the power subsystem 622, and thereby receives signals indicating the status of the one or more battery conditions. The microprocessor 602 can notify any of these conditions to the user of the device 600, such as by generating visible indicators on the display 634 and/or generating audible indicators via the audio subsystem 628 and the speakers 626.

The microprocessor 602 is communicatively coupled with the USB port 632 and thereby provides data communication between the electronic device 600 and one or more external devices. Data communication through USB port 632 enables various user data, such as data files or configuration parameters for the electronic device 600 to be exchanged between the device 600 and an external device. The USB port 632 is also able to be used to convey external power to the power subsystem 622 from a suitable external power supply.

Operating system software and configuration parameters used by the microprocessor 602 are stored in the flash memory 606 which is communicatively coupled with the microprocessor 602. In addition to, or in place of, flash memory 606, a battery backed-up RAM or other non-volatile storage data elements are able to store operating systems, other executable programs, configuration parameters, or any combination thereof. As an example, a computer executable program configured to perform the display transition process 700, as is described above, can be included in a software module stored in the flash memory 606.

RAM memory 604 is communicatively coupled with the microprocessor 602, and is used to store data produced or used by the microprocessor 602. RAM memory 604 is further able to temporarily store program data from flash memory 606 or from other storage locations. RAM memory 604 is also used to store data received via wireless communication signals or through wired communication.

The microprocessor 602 in some examples executes operating system software as well as various other software applications such as user applications, small, special purpose applications referred to as "apps," and the like. Some software, such as operating system and other basic user functions such as address books are able to be provided as part of the manufacturing process for the electronic device.

In addition to loading applications as part of a manufacturing process, further applications and/or configuration parameters are able to be loaded onto the electronic device 600 through, for example, the wireless network 650, an auxiliary I/O device 638, USB port 632, short-range communication subsystem 620, or any combination of these interfaces. Once these applications are loaded into the electronic device 600, these applications can be executed by the microprocessor 602.

A media reader 660 is able to be connected to the auxiliary I/O device 638 to allow, for example, loading computer readable program code of a computer program product into the electronic device 600 for storage into flash memory 606. One example of a media reader 660 is an optical drive such as a CD/DVD drive, which may be used to store data to and read data from a computer readable medium or storage product such as computer readable storage media 662. Examples of suitable computer readable storage media include optical storage media such as a CD or DVD, magnetic media, or any other suitable data storage device. The media reader 660 is alternatively able to be connected to the electronic device through the USB port 632 or computer readable program code is alternatively able to be provided to the electronic device 600 through the wireless network 650.

As shown in FIG.6, the microprocessor (processor/controller) 602 is communicatively coupled with a camera system 618. The camera system 618 may include one or more camera devices 522, 524, as shown in FIG.5. One or more signals from the camera system 618 are communicatively coupled with the processor/controller 602 which can use the signals in many different ways. According to the present example, the processor/controller 602 can use the signals from the camera system 618 as information to determine an approximate location of a user's head relative to a touch screen display 634 outer surface where a touch input interaction has been detected on the touch input display 634.

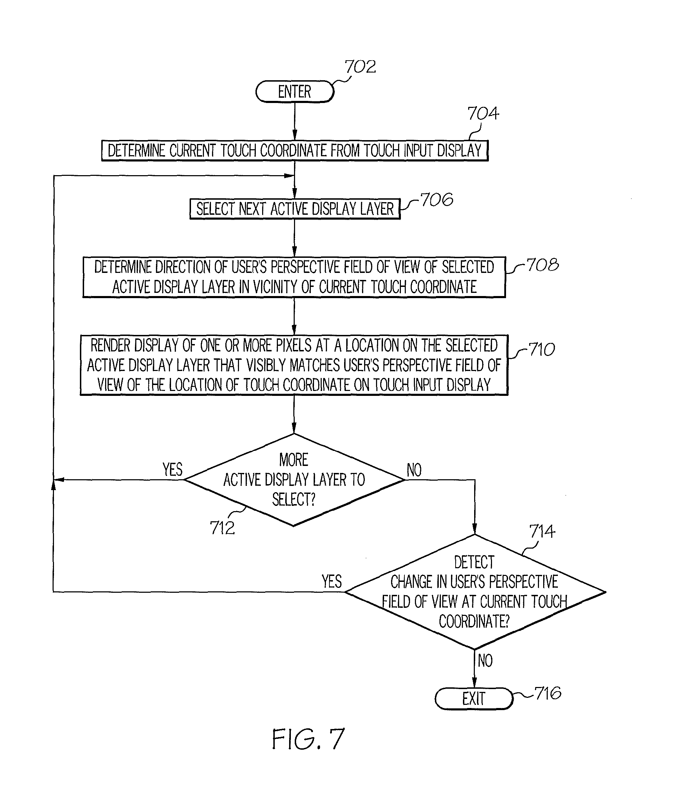

Referring to FIG. 7, an example of an operational sequence for a display controller 602 is shown according to an embodiment of the present disclosure. After the display controller 602 enters, at step 702, the operational sequence the display controller 602 determines the current location 309 indicated by the touch coordinates from a touch input display, at step 704. When a touch input interaction is detected at a location 309 on the outer touch sensitive layer of the touch input display, the display controller 602 can determine the corresponding touch coordinates. These touch coordinates also identify the corresponding coordinates of locations immediately below in each of the display layers 304, 402, 404, along the normal axis 310.

The display controller 602, at step 706, selects a next active display layer 304, 402, 404, where one or more display elements 315, 411, 413, are to be displayed. These one or more display elements are to be displayed at a location visually coincident to the location 309 indicated by the touch coordinates on the outer touch sensitive surface of the translucent layer 302 of the touch input display 508, 634, and along the apparent direction 314 of the user's perspective field of view 312. The display controller 602, at step 708, determines the apparent direction 314 of a user's perspective field of view 312 relative to the location 309 indicated by the touch coordinates and thereby determines a location in the selected active display layer 304, 402, 404, in visible vicinity of (visibly coincident with) the location 309 indicated by the touch coordinates on the touch sensitive surface of the translucent layer 302.

The display controller 602, at step 710, renders display of one or more display elements (e.g., one or more pixels) 315, 411, 413, at the location on the selected active display layer 304, 402, 404, that visibly matches (is visibly coincident with or in the visible vicinity of) the location 309 of the touch coordinates on the outer touch sensitive surface of the touch input display 508, 634, as seen from the apparent direction 314 of the user's perspective field of view 312. That is, for example, a display controller 602 can determine a relative distance 316, 410, 412, from the normal axis 310 in the respective display layer 304, 402, 404, and along the determined direction 314 of the user's field of view 312, and there render display of the one or more display elements (e.g., one or more pixels) 315, 411, 413. The display controller 602, utilizes the determined direction 314 of the user's perspective field of view 312 relative to the location 309 of the touch coordinates and the known distance 306, 406, 408, of the respective display layer 304, 402, 404, relative to the outer touch sensitive surface of the touch input display, to determine (e.g., calculate, geometrically calculate, and the like) the distance 316, 410, 412, from the normal axis 310 where to render display of the one or more display elements 315, 411, 413, along the determined direction 314 of the user's perspective field of view 312.

It should be noted that, according to various embodiments, other displayed image elements in the one or more display layers 304, 402, 404, may be visibly associated with the one or more display elements 315, 411, 413, directly corresponding to the location indicated by the touch coordinates. For example, as shown in FIG. 1, several display elements forming a displayed image of a curvilinear line 116 are considered associated with each other in collectively forming the displayed image of the curvilinear line 116. When any one or more of a collection of associated display image elements, according to these various embodiments, is located (or re-located) at a new location on a display layer 304, 402, 404, to visually coincide with a location 309 on the outer touch sensitive surface of the touch input display, indicated by determined touch coordinates, all the other associated display image elements in the collection (e.g., the rest of the several displayed elements forming the displayed image of a curvilinear line 116) will also be located (or re-located) in their respective display layer 304, 402, 404, at new respective locations to visually track the new location of the one or more displayed image elements that visually coincide with the location 309 on the outer touch sensitive surface. In this way, the visible integrity of the displayed image of the collection (e.g., maintaining the visible integrity of the displayed image of the curvilinear line 116) is maintained. This location (or re-location) of all associated display image elements in a collection, according to various embodiments, reduces the visible discrepancy 118 between the location of the one or more display elements 315, 411, 413, directly corresponding to the location 309 indicated by the touch coordinates while maintaining the visible integrity of the entire collection of associated display image elements.

The display controller 602, at step 712, can repeat steps 706, 708, 710, for each of the one or more active display layers 304, 402, 404, where one or more display elements 315, 411, 413, are to be displayed along the determined direction 314 of the user's perspective field of view 312 relative to the location 309 indicated by the touch coordinates. After all active display layers 304, 402, 404, have been processed, at step 712, the display controller 602, at step 714, determines whether there has been a change in the direction 314 of the user's perspective field of view 312 relative to the location 309 indicated by the current touch coordinates. If there has been a change then the display controller 602 repeats the several process steps 706, 708, 710, 712, to re-display the one or more display elements 315 , 411, 413, to visibly match (i.e., to make visibly coincident) the locations of each of the one or more display elements 315 , 411, 413, to the location 309 on the outer touch sensitive surface indicated by the touch coordinates and along the new determined direction 314 of the user's perspective field of view 312. According to certain embodiments, any displayed (or re-displayed) display image elements in a collection of associated display image elements (e.g., the several displayed image elements forming the displayed image of a curvilinear line 116) will all be re-located in their respective display layer 304, 402, 404, at new respective locations to visually track the new location of the one or more displayed image elements 315 , 411, 413, directly corresponding to the location 309 on the outer touch sensitive surface of the touch input display indicated by the determined touch coordinates. The re-location of the entire collection of associated display image elements maintains the visible integrity of the displayed image of the collection (e.g., maintains the visible integrity of the displayed image of the curvilinear line 116).

If there is no change detected, at step 714, the display controller 602 then exits the operational sequence, at step 716. Upon determination of a new set of touch coordinates 309 from the touch input display508, 634, the display controller 602 then may repeat the operational sequence illustrated in the example of FIG. 7.

In this way, a display controller 602 for an electronic device can repeatedly (continuously) dynamically adjust the location of one or more display elements 315, 411, 413, in respective display layers 304,402,404, based on continuously determining changes in the direction 314 of a user's perspective field of view 312 relative to touch input coordinates 309.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of computer instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, computer instructions, messages or message packets, and other computer readable information from the computer readable medium. The computer readable medium may include computer readable storage medium tangibly embodying non-volatile memory, such as read-only memory (ROM), flash memory, disk drive memory, CD-ROM, and other permanent storage. Additionally, a computer readable medium may include tangibly embodied volatile storage such as RAM, buffers, cache memory, and network circuits. Furthermore, according to various other embodiments, the computer readable medium may comprise computer readable information in a transitory state medium such as a network link and/or a network interface, including a wired network or a wireless network that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. An electronic device comprising:
at least one processor/controller (602);
memory (604, 606) storing computer instructions;
a touch input display (508, 634) comprising:
a translucent layer (302);
a translucent touch sensitive screen layer communicatively coupled to the processor/controller and disposed above the translucent layer, the touch sensitive screen layer having an outer surface; and
at least one display layer (304, 402, 404) disposed adjacent to the translucent layer and a given distance (306, 406, 408) below the translucent layer, for rendering an image visible above the touch sensitive screen layer;
at least one camera (522, 524, 618) communicatively coupled to the at least one processor/controller and positioned to have a field of view directed toward a region above the touch sensitive screen layer; and
in response to executing the computer instructions, the at least one processor performing operations comprising:
receiving a touch coordinate signal from the touch input display, the touch coordinate signal representing touch coordinates of a location (309) on the outer surface of the touch sensitive screen layer at which a contact interaction is detected;
determining (708), based on at least image information from the at least one camera and the touch coordinates, a direction (314) of a user's perspective field of view (312) of the location (309) on the touch sensitive screen layer at which a contact interaction is detected;
determining (710) a location on one of the at least one display layer that visibly matches the location (309) corresponding to the touch coordinates on the touch sensitive screen layer along the determined direction (314) of a user's perspective field of view (312); and
rendering (710), based at least on detecting the contact interaction at the location on the touch sensitive screen layer, one or more display elements (315, 411, 413) at the determined location on the at least one display layer (304, 402, 404).

2. The electronic device of claim 1, wherein the at least one processor/controller, responsive to executing the computer instructions, performs operations comprising:
continuously determining (714, 706, 708), based on at least image information from the at least one camera and the touch coordinates, a direction of a user's perspective field of view of the location on the touch sensitive screen layer at which a contact interaction is detected;
determining (710), based at least on the continuously determined direction of a user's perspective field of view being a new determined direction of a user's perspective field of view of the location on the touch sensitive screen layer, a new location on the one of the at least one display layer that visibly matches the location (309) corresponding to the touch coordinates on the touch sensitive screen layer along the new determined direction (314) of a user's perspective field of view (312); and
rendering (710), based at least on detecting the contact interaction at the location on the touch sensitive screen layer and on the new determined direction of a user's perspective field of view, re-display of the one or more display elements (315, 411, 413) at the new location on the one of the at least one display layer (304, 402, 404).

3. The electronic device of any of claims 1 or 2, wherein the at least one processor/controller, responsive to executing the computer instructions, performs operations comprising:
associating the one or more display elements that are displayed at the determined location on the one of the at least one display layer with one or more other display elements displayed at the at least one display layer as a collection of associated display image elements;
determining, based at least on the new determined direction of a user's perspective field of view of the location corresponding to the touch coordinates on the touch sensitive screen layer, a new respective location on the at least one display layer for respective each of the one or more other display image elements of the collection of associated display image elements, the new respective location visibly tracking the new determined location on the one of the at least one display layer that visibly matches the location corresponding to the touch coordinates on the touch sensitive screen layer along the new determined direction of a user's perspective field of view; and
rendering re-display of the respective each of the one or more other display image elements on the at least one display layer at the new respective location thereby maintaining visible integrity of the collection of associated display image elements displayed on the at least one display layer.

4. The electronic device of any of claims 1 to 3, wherein:
the at least one display layer (304, 402, 404) comprises a first display layer disposed adjacent to a second display layer, the second display layer being disposed a greater distance below the touch sensitive screen layer than the first display layer, the first display layer being at least partially translucent and permitting an image displayed on the second display layer to be visible above the first display layer and therethrough visible above the touch sensitive screen layer; and
the at least one processor/controller (602), responsive to executing the computer instructions, performs operations comprising:
selecting (706) one of the first display layer and the second display layer;
determining (708) a location on the selected one of the first display layer and the second display layer that visibly matches the location corresponding to the touch coordinates on the touch sensitive screen layer along the determined direction of a user's perspective field of view; and
rendering (710), based at least on detecting the contact interaction at the location on the touch sensitive screen layer, one or more display elements at the determined location on the selected one of the first display layer and the second display layer.

5. The electronic device of claim 4, wherein the at least one processor/controller, responsive to executing the computer instructions, performs operations comprising:
continuously determining (714, 706, 708), based on at least image information from the at least one camera and the touch coordinates, a direction of a user's perspective field of view of the location on the touch sensitive screen layer at which a contact interaction is detected;
determining, based at least on the continuously determined direction of a user's perspective field of view being a new determined direction of a user's perspective field of view of the location on the touch sensitive screen layer, a new location on the selected one of the first display layer and the second display layer that visibly matches the location corresponding to the touch coordinates on the touch sensitive screen layer along the new determined direction of a user's perspective field of view; and
rendering, based at least on detecting the contact interaction at the location on the touch sensitive screen layer and on the new determined direction of a user's perspective field of view, re-display of the one or more display elements at the new location on the selected one of the first display layer and the second display layer.

6. The electronic device of any of claims 1 to 5, wherein the determining a location on one of the at least one display layer that visibly matches the location corresponding to the touch coordinates on the touch sensitive screen layer along the determined direction of a user's perspective field of view, comprises:
geometrically calculating the location on the one of the at least one display layer to visibly match the location of the touch coordinates on the touch sensitive screen layer.

7. The electronic device of any of claims 1 to 6, wherein the electronic device comprises at least one of: a Personal Digital Assistant (PDA), a smart-phone, a cellular telephone, a mobile phone, a tablet computer, and a laptop PC.

8. A method, with an electronic device comprising a processor (602) communicatively coupled with a touch input display (508, 634) and at least one camera (522, 524, 618), the touch input display comprising a touch sensitive screen layer, and a translucent layer (302) disposed above and adjacent to at least one display layer (304, 402, 404), the method comprising:
receiving, with the processor, a touch coordinate signal from the touch input display, the touch coordinate signal representing touch coordinates of a location (309) on the outer surface of the touch sensitive screen layer at which a contact interaction is detected;
determining (708), based on at least image information from the at least one camera and the touch coordinates, a direction (314) of a user's perspective field of view (312) of the location (309) on the touch sensitive screen layer at which a contact interaction is detected;
determining (710) a location on one of the at least one display layer that visibly matches the location (309) corresponding to the touch coordinates on the touch sensitive screen layer along the determined direction (314) of a user's perspective field of view (312); and
rendering (710), based at least on detecting the contact interaction at the location on the touch sensitive screen layer, one or more display elements (315, 411, 413) at the determined location on the one of the at least one display layer (304, 402, 404).

9. The method of claim 8, further comprising:
continuously determining (714, 706, 708), based on at least image information from the at least one camera and the touch coordinates, a direction of a user's perspective field of view of the location on the touch sensitive screen layer at which a contact interaction is detected;
determining (710), based at least on the continuously determined direction of a user's perspective field of view being a new determined direction of a user's perspective field of view of the location on the touch sensitive screen layer, a new location on one of the at least one display layer that visibly matches the location (309) corresponding to the touch coordinates on the touch sensitive screen layer along the new determined direction (314) of a user's perspective field of view (312); and
rendering (710), based at least on detecting the contact interaction at the location on the touch sensitive screen layer and on the new determined direction of a user's perspective field of view, re-display of the one or more display elements (315, 411, 413) at the new location on the one of the at least one display layer (304, 402, 404).

10. The method of any of claims 8 to 9, further comprising:
associating the one or more display elements that are displayed at the determined location on the one of the at least one display layer with one or more other display elements displayed at the at least one display layer as a collection of associated display image elements;
determining, based at least on the new determined direction of a user's perspective field of view of the location corresponding to the touch coordinates on the touch sensitive screen layer, a new respective location on the at least one display layer for respective each of the one or more other display elements of the collection of associated display image elements, the new respective location visibly tracking the new determined location on the one of the at least one display layer that visibly matches the location corresponding to the touch coordinates on the touch sensitive screen layer along the new determined direction of a user's perspective field of view; and
rendering re-display of the respective each of the one or more other display elements on the at least one display layer at the new respective location thereby maintaining visible integrity of the collection of associated display image elements displayed on the at least one display layer.

11. The method of any of claims 8 to 10, wherein the at least one display layer (304, 402, 404) comprises a first display layer disposed adjacent to a second display layer, the second display layer being disposed a greater distance below the touch sensitive screen layer than the first display layer, the first display layer being at least partially translucent and permitting an image displayed on the second display layer to be visible above the first display layer and therethrough visible above the touch sensitive screen layer, and the method comprising:
selecting (706) one of the first display layer and the second display layer;
determining (708) a location on the selected one of the first display layer and the second display layer that visibly matches the location corresponding to the touch coordinates on the touch sensitive screen layer along the determined direction of a user's perspective field of view; and
rendering (710), based at least on detecting the contact interaction at the location on the touch sensitive screen layer, display of one or more display elements at the determined location on the selected one of the at least one display layer.

12. The method of claim 11, further comprising:
continuously determining (714, 706, 708), based on at least image information from the at least one camera and the touch coordinates, a direction of a user's perspective field of view of the location on the touch sensitive screen layer at which a contact interaction is detected;
determining, based at least on the continuously determined direction of a user's perspective field of view being a new determined direction of a user's perspective field of view of the location on the touch sensitive screen layer, a new location on the selected one of the first display layer and the second display layer that visibly matches the location corresponding to the touch coordinates on the touch sensitive screen layer along the new determined direction of a user's perspective field of view; and
rendering, based at least on detecting the contact interaction at the location on the touch sensitive screen layer and on the new determined direction of a user's perspective field of view, re-display of the one or more display elements at the new location on the selected one of the first display layer and the second display layer.

13. The method of any of claims 8 to 12, wherein the determining a location on one of the at least one display layer that visibly matches the location corresponding to the touch coordinates on the touch sensitive screen layer along the determined direction of a user's perspective field of view, comprises:
geometrically calculating the location on the one of the at least one display layer to visibly match the location of the touch coordinates on the touch sensitive screen layer.

14. The touch input display of the electronic device of any of claims 1 to 13, wherein the one or more display elements (315, 411, 413) comprise one or more pixels.

15. A computer program product according to any of claims 1 to 14, the computer program product comprising:
a computer readable storage medium (662) having computer readable program code embodied therewith, the computer readable program code comprising instructions which, responsive to being executed by a processor (602) communicatively coupled with a touch input display (508, 634) and at least one camera (522, 524, 618), cause the processor to perform operations comprising:
receiving, with the processor, a touch coordinate signal from the touch input display, the touch input display comprising a touch sensitive screen layer disposed on a translucent layer (302) which is disposed above and adjacent to at least one display layer (304, 402, 404), the touch coordinate signal representing touch coordinates of a location (309) on the outer surface of the touch sensitive screen layer at which a contact interaction is detected;
determining, based on at least image information from the at least one camera and the touch coordinates, a direction (314) of a user's perspective field of view (312) of the location (309) on the touch sensitive screen layer at which a contact interaction is detected;
determining a location on one of the at least one display layer (304, 402, 404) that visibly matches the location (309) corresponding to the touch coordinates on the touch sensitive screen layer along the determined direction (314) of a user's perspective field of view (312); and
rendering, based at least on detecting the contact interaction at the location on the touch sensitive screen layer, one or more display elements (315, 411, 413) at the determined location on one of the at least one display layer (304, 402, 404).
